# EUROPEAN PATENT SPECIFICATION

(11) **EP 3 863 347 B1**
(45) Date of publication and mention of the grant of the patent: **09.04.2025**
(21) Application number: 19878021.5
(22) Date of filing: 04.11.2019
(51) Int. Cl.: H04L 5/00, H04W 72/20, H04W 72/0446, H04W 72/0453, H04W 76/14

(54) **RESOURCE CONFIGURATION METHOD AND DEVICE**
RESSOURCENKONFIGURATIONSVERFAHREN UND -VORRICHTUNG
PROCÉDÉ ET DISPOSITIF DE CONFIGURATION DE RESSOURCES

(30) Priority: 02.11.2018 CN 201811305005
(43) Date of publication of application: 11.08.2021
(73) Proprietor: Huawei Technologies Co., Ltd., Longgang District Shenzhen, Guangdong 518129 (CN)
(72) Inventor: SU, Hongjia, Shenzhen, Guangdong 518129 (CN); ZHANG, Jinfang, Shenzhen, Guangdong 518129 (CN); XIANG, Zhengzheng, Shenzhen, Guangdong 518129 (CN)
(74) Representative: Gill Jennings & Every LLP
(86) International application number: PCT/CN2019/115445
(87) International publication number: WO 2020/088688

(56) References cited:
- EP-A1- 3 846 371
- WO-A1-2016/119241
- CN-A- 105 451 211
- CN-A- 108 512 576
- US-A1- 2018 103 441
- ZTE: "Discussion on NR Sidelink Physical resource pool allocation", vol. RAN WG1, no. Gothenburg, Sweden; 20180820 - 20180824, 10 August 2018 (2018-08-10), XP051515982, Retrieved from the Internet <URL:http://www.3gpp.org/ftp/tsg%5Fran/WG1%5FRL1/TSGR1%5F94/Docs/R1%2D1808605%2Ezip> [retrieved on 20180810]
- CATT: "Discussion on resource allocation mechanism in NR V2X", vol. RAN WG1, 29 September 2018 (2018-09-29), pages 1 - 7, XP051517950, Retrieved from the Internet <URL:http://www.3gpp.org/ftp/tsg%5Fran/WG1%5FRL1/TSGR1%5F94b/Docs/R1%2D1810542%2Ezip> [retrieved on 20180929]
- ZTE: "Resource pool allocation enhancement for V2V", vol. RAN WG1, no. St Julian's, Malta; 20160215 - 20160219, 14 February 2016 (2016-02-14), XP051054010, Retrieved from the Internet <URL:http://www.3gpp.org/ftp/Meetings_3GPP_SYNC/RAN1/Docs/> [retrieved on 20160214]

## Description

### TECHNICAL FIELD

This application relates to the field of communications technologies, and in particular, to a resource configuration method and apparatus.

### BACKGROUND

Vehicle-to-everything (Vehicle-To-Everything, V2X) communication refers to communication between a vehicle and any external entities, including vehicle-to-vehicle (Vehicle to Vehicle, V2V) communication, vehicle-to-pedestrian (Vehicle to Pedestrian, V2P) communication, vehicle-to-infrastructure (Vehicle to Infrastructure, V2I) communication, and vehicle-to-network (Vehicle to Network, V2N) communication.

Currently, some basic requirements in a V2X scenario can already be met in long term evolution (Long Term Evolution, LTE) V2X communication. However, LTE V2X communication cannot effectively support future application scenarios such as fully intelligent driving and automatic driving. With further development of 5th generation (Fifth-generation, 5G) mobile communications, new radio (new radio, NR) V2X can gradually implement more reliable transmission, support a higher throughput, and meet a requirement of a wider application scenario.

In a current LTE V2X system, a base station indicates a control region of a terminal through a physical control format indicator channel (Physical Control Format Indicator Channel, PCFICH), that is, the base station configures a control information resource for the terminal. In this case, a same control region is configured for all terminals that multiplex the PCFICH. However, different terminals usually have different service requirements in NR V2X. If a resource configuration manner in LTE V2X is still used, definitely, the service requirements of the different terminals cannot be met. Therefore, a resource configuration method applicable to NR V2X needs to be urgently provided.

ZTE, "Discussion on NR Sidelink Physical resource pool allocation", vol. RAN WG1, no. Gothenburg, Sweden; 20180820 - 20180824, (20180810), 3GPP DRAFT; R1-1808605 - 7.2.4.1.4 DISCUSSION ON NR SIDELINK RESOURCE POOL ALLOCATION, 3RD GENERATION PARTNERSHIP PROJECT (3GPP), MOBILE COMPETENCE CENTRE ; 650, ROUTE DES LUCIOLES ; F-06921 SOPHIA-AN, URL: http://www.3gpp.org/ftp/tsg%5Fran/WG1%5FRL1/TSGR1%5F94/Docs/R1%2D1808605%2Ezi p, (20180810), discusses NR sidelink physical resource pool allocation.

CATT, "Discussion on resource allocation mechanism in NR V2X", vol. RAN WG1, (20180929), pages 1 - 7, 3GPP DRAFT; R1-1810542, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/tsg%5Fran/WG1%5FRL1/TSGR1%5F94b/Docs/R1%2D1810542%2Ez ip, (20180929), discusses resource allocation mechanism in NR V2X.

EP3846371 relates to method for transmitting sidelink information, communication device and network device. This document has an earlier patent document but was published on or after the filing date of the present application and accordingly, the provisions of Article 54(3) EPC apply.

### SUMMARY

Implementations of this application provide a resource configuration method and apparatus, to meet service requirements of different terminals in an NR V2X scenario.

The invention has been defined in the independent claims. Further specific technical features have been defined in the dependent claims. Any embodiment, aspect or example not claimed is only presented as information.

### BRIEF DESCRIPTION OF DRAWINGS

FIG. 1 is a schematic architectural diagram of a communications system according to an implementation of this application;
FIG. 2 is a schematic structural diagram of a communications device according to an implementation of this application;
FIG. 3 is a flowchart of a resource configuration method according to an implementation of this application;
FIG. 4 is a schematic diagram of frequency division multiplexing between resources according to an implementation of this application;
FIG. 5 is a schematic diagram 1 of time division multiplexing between resources according to an implementation of this application;
FIG. 6 is a schematic diagram 2 of time division multiplexing between resources according to an implementation of this application;
FIG. 7 is a schematic diagram 3 of time division multiplexing between resources according to an implementation of this application;
FIG. 8 is a schematic diagram of time division multiplexing between resources at a granularity of a mini-slot according to an implementation of this application;
FIG. 9 is a schematic diagram of time division multiplexing according to an implementation of this application;
FIG. 10 is a schematic diagram of time division multiplexing according to an implementation of this application;
FIG. 11 is a schematic diagram of time division multiplexing according to an implementation of this application;
FIG. 12 is a schematic diagram of time division multiplexing according to an implementation of this application;
FIG. 13 is a flowchart of a resource configuration method according to an implementation of this application;
FIG. 14 is a flowchart of a resource configuration method according to an implementation of this application;
FIG. 15 is a flowchart of a resource configuration method according to an implementation of this application;
FIG. 16 is a flowchart of a resource configuration method according to an implementation of this application; and
FIG. 17 is a schematic structural diagram of a resource configuration apparatus according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

In the specification and the accompanying drawings of this application, the terms "first", "second", and the like are intended to distinguish between different objects or distinguish between different processing of a same object, but do not indicate a particular order of the objects. In addition, the terms "including" and "having", and any other variant thereof mentioned in the descriptions of this application are intended to cover a non-exclusive inclusion. For example, a process, a method, a system, a product, or a device that includes a series of steps or units is not limited to listed steps or units, but optionally further includes other unlisted steps or units, or optionally further includes another inherent step or unit of the process, the method, the product, or the device. It should be noted that in the implementations of this application, the word such as "example" or "for example" is used to represent giving an example, an illustration, or a description. Any implementation or design scheme described as "example" or "for example" in the implementations of this application should not be explained as being more preferred or having more advantages than another implementation or design scheme. Exactly, use of the words such as "example" or "for example" is intended to present a related concept in a specific manner. The term "a plurality of" mentioned in the implementations of this application usually refers to two or more than two.

First, explanations of some technical terms used in the implementations of this application are provided.

Sidelink (Sidelink, SL): In V2X, a terminal may perform communication in two manners. First, terminals communicate with each other by using a Uu interface. That is, communication between the terminals needs to be forwarded by a node such as a base station. Second, sidelink communication may be performed between the terminals. That is, direct communication may be performed between the terminals without forwarding by the base station. In this case, a link directly connected between the terminals is referred to as a sidelink.

Physical sidelink control channel (Physical Sidelink Control Channel, PSCCH): The PSCCH is used to carry sidelink control information (sidelink control information, SCI). The SCI may be used to indicate at least one of a coded modulation format, a time-frequency resource, resource reservation information, a retransmission indication, a source address of the terminal, a destination address of the terminal, hybrid automatic repeat request (Hybrid Automatic Repeat reQuest, HARQ) information, and the like of sidelink data information. A receive end during the sidelink communication receives and parses the SCI on the PSCCH, and then receives and parses the sidelink data information based on the parsed SCI.

Physical sidelink shared channel (Physical Sidelink Share Channel, PSSCH): The PSSCH is used to carry the sidelink data information, where the sidelink data information is service data information during the sidelink communication.

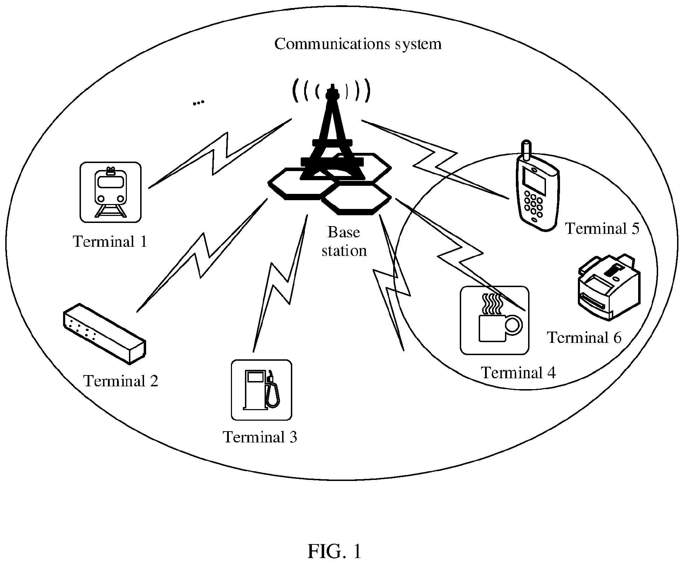

FIG. 1 shows an architecture of a communications system to which an implementation of this application is applicable. The communications system includes an access network device and a plurality of terminal devices (for example, a terminal 1 to a terminal 6 in FIG. 1) that communicate with the access network device.

The access network device in this implementation of this application is an apparatus that is deployed in a radio access network to provide a wireless communication function. The access network device includes various forms of macro base stations, micro base stations (also referred to as small cells), relay stations, transmission reception points (Transmission Reception Point, TRP), evolved NodeBs (Evolved Node B, eNB), next-generation NodeBs (g Node B, gNB), evolved NodeBs (ng evolved Node B, ng-eNB) connected to a next-generation core network, and the like. Alternatively, in a distributed base station scenario, the access network device may be a baseband unit (Base Band Unit, BBU) and a remote radio unit (Remote Radio Unit, RRU). In a cloud radio access network (Cloud Radio Access Network, C-RAN) scenario, the access network device may be a baseband pool (BBU pool) and an RRU.

Optionally, the terminal in the implementations of this application may include various handheld devices, vehicle-mounted devices, wearable devices, or computing devices that have a wireless communication function, or another processing device connected to a wireless modem. The terminal may further include a subscriber unit (subscriber unit), a cellular phone (cellular phone), a smartphone (smart phone), a wireless data card, a personal digital assistant (personal digital assistant, PDA) computer, a tablet computer, a wireless modem (modem), a handheld (handheld) device, a laptop computer (laptop computer), a machine type communication (machine type communication, MTC) terminal (terminal), user equipment (user equipment, UE), a terminal device (terminal device), a subscriber station (Subscriber Station, SS), a mobile station (mobile station, MS), customer premises equipment (customer premise equipment, CPE), or the like. For ease of description, in this application, the devices mentioned above are collectively referred to as terminals.

The foregoing communications system may be applied to a current long term evolution (Long Term Evolution, LTE) or long term evolution-advanced (LTE Advanced, LTE-A) system, or may be applied to a 5G network that is currently being formulated or another future network. This is not specifically limited in the implementations of this application. In different networks, the access network device and the terminal in the foregoing communications system may correspond to different names. A person skilled in the art may understand that the names do not constitute a limitation on the devices.

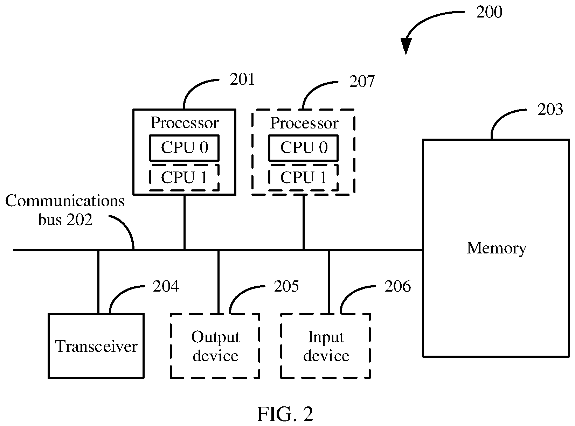

Optionally, the terminal and the access network device in the implementations of this application may be implemented by using different devices. For example, the terminal and the access network device in the implementations of this application may be implemented by using a communications device in FIG. 2. FIG. 2 is a schematic structural diagram of hardware of a communications device according to an implementation of this application. The communications device 200 includes at least one processor 201, a communications line 202, a memory 203, and at least one transceiver 204.

The processor 201 may be a general-purpose central processing unit (central processing unit, CPU), a microprocessor, an application-specific integrated circuit (application-specific integrated circuit, ASIC), or one or more integrated circuits that are configured to control execution of a program in the solutions of this application.

The communications line 202 may include a path for transmitting information between the foregoing components.

The transceiver 204 is configured to communicate with another device. Optionally, the transceiver may be an independently disposed transmitter, and the transmitter may be configured to send information to another device. Alternatively, the transceiver may be an independently disposed receiver, and is configured to receive information from another device. Alternatively, the transceiver may be a component integrating functions of sending and receiving information. A specific implementation of the transceiver is not limited in this implementation of this application.

The memory 203 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used to carry or store expected program code in a form of an instruction or a data structure and that can be accessed by a computer. However, the memory 203 is not limited thereto. The memory may exist independently, and is connected to the processor through the communications line 202. Alternatively, the memory may be integrated with the processor.

The memory 203 is configured to store computer-executable instructions for executing the solutions of this application, and the processor 201 controls the execution. The processor 201 is configured to execute the computer-executable instructions stored in the memory 203, to implement a resource configuration method provided in the following implementations of this application.

Optionally, the computer-executable instructions in this implementation of this application may also be referred to as application program code. This is not specifically limited in implementations of this application.

During specific implementation, in an implementation, the processor 201 may include one or more CPUs, for example, a CPU 0 and a CPU 1 in FIG. 2.

During specific implementation, in an implementation, the communications device 200 may include a plurality of processors, for example, the processor 201 and a processor 207 in FIG. 2. Each of the processors may be a single-core (single-CPU) processor or a multi-core (multi-CPU) processor. The processor herein may be one or more devices, circuits, and/or processing cores configured to process data (for example, computer program instructions).

During specific implementation, in an implementation, the communications device 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive an input from a user in a plurality of manners. For example, the input device 206 may be a mouse, a keyboard, a touchscreen device, or a sensing device.

The communications device 200 may be a general-purpose device or a dedicated device. A type of the communications device 200 is not limited in this implementation of this application. The terminal or the access network device may be a device having a structure similar to that in FIG. 2.

An implementation of this application provides a resource configuration method. The following mainly describes the resource configuration method in this implementation of this application by using an example in which the resource configuration method is applied to NR V2X. It should be noted that the resource configuration method in this implementation of this application may be applied to not only the NR V2X but also another communications system. The resource configuration method provided in this implementation of this application may be used, provided that different resources need to be configured for different terminals in the communications system.

The following mainly describes the resource configuration method in this implementation of this application by using an example in which a first terminal is a transmit end of sidelink data information and a second terminal is a receive end of the sidelink data information. Certainly, in an actual application scenario, roles of the first terminal and the second terminal may be interchanged. In other words, the first terminal may also be used as the receive end of the sidelink data information, and the second terminal may also be used as the transmit end of the sidelink data information.

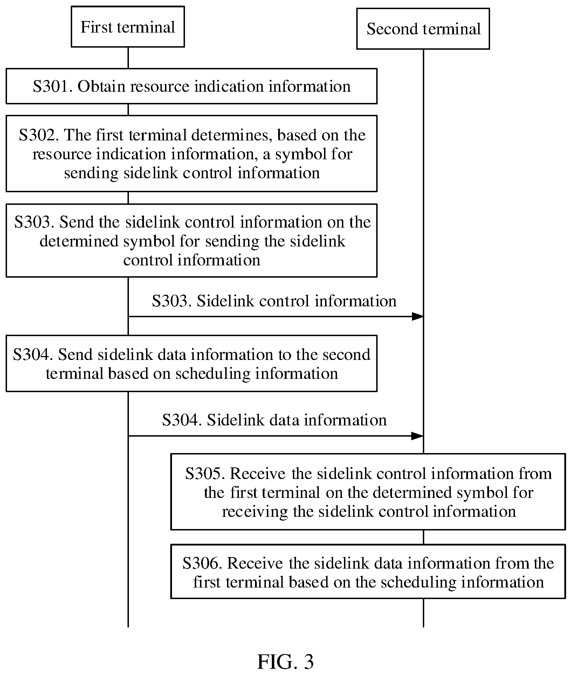

Refer to FIG. 3. The resource configuration method in this implementation of this application includes the following steps S301 and S302.

S301. The first terminal obtains resource indication information.

The resource indication information is used to indicate a quantity of symbols or a symbol occupied by a PSCCH in one slot (slot) or mini-slot (mini-slot).

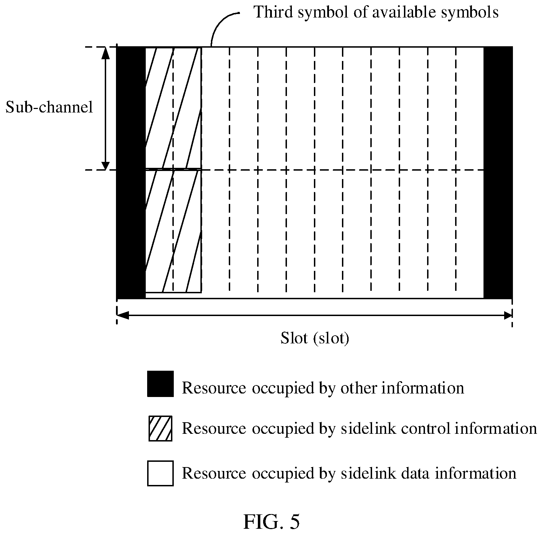

When the resource indication information is used to indicate the quantity of symbols occupied by the PSCCH in the one slot or mini-slot, symbols that are specifically occupied by the PSCCH may be predefined in a protocol. For example, referring to FIG. 5, the protocol predefines that the PSCCH occupies the first N symbols, the last M symbols, or other L symbols of available symbols in the one slot. The available symbols are symbols used to send sidelink control information and the sidelink data information. In an example in which the protocol predefines that the PSCCH occupies the first N symbols of the available symbols in the one slot, when the resource indication information indicates that the PSCCH occupies two symbols in the one slot or mini-slot, as shown in FIG. 5, it indicates that the PSCCH occupies a first symbol and a second symbol in the available symbols in the one slot.

When the resource indication information is used to indicate the symbol occupied by the PSCCH in the one slot or mini-slot, still referring to FIG. 5, the resource indication information may directly indicate that the PSCCH occupies the first symbol and the second symbol in the available symbols in the one slot.

In this implementation of this application, based on different quantities of symbols occupied by the PSCCH in the one slot or mini-slot, the resource indication information may indicate different resource multiplexing manners of the PSCCH and a PSSCH. Resource multiplexing manners include time division multiplexing (Time Division Multiplexing, TDM) and frequency division multiplexing (Frequency Division Multiplexing, FDM). The following separately describes the two resource multiplexing manners in a case 1 and a case 2.

Case 1: According to this claimed implementation, when a quantity of symbols occupied by the sidelink control information in the one slot or mini-slot is equal to a quantity of available symbols in the one slot or mini-slot, frequency division multiplexing is performed between a resource for sending the PSCCH and a resource for sending the PSSCH. The quantity of available symbols in the one slot or mini-slot is a quantity of symbols that are used to send the PSCCH and the PSSCH in the one slot or mini-slot.

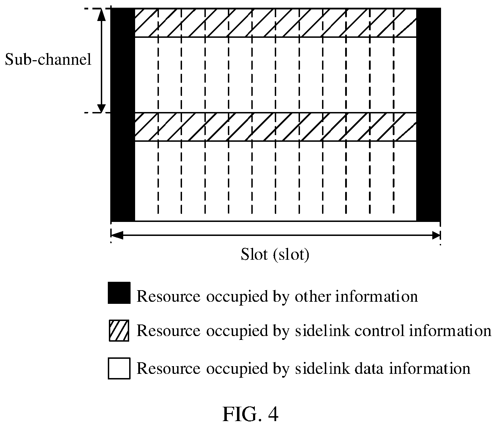

For example, referring to FIG. 4, a subframe with a 15 kHz subcarrier spacing of a normal cyclic prefix (Normal Cyclic Prefix) is used as an example. The subframe includes one slot, and the slot includes 14 orthogonal frequency division multiplexing (Orthogonal Frequency Division Multiplexing, OFDM) symbols (Symbol). The slot shown in FIG. 4 may be used to send the PSCCH, the PSSCH, and/or other information, and a resource for sending the other information occupies two symbols. A quantity of symbols that can be used to send sidelink communication, that is, a quantity of symbols used to send the PSCCH and the PSSCH is 12. Among the 12 symbols that can be used to send the sidelink communication, a quantity of symbols for sending the PSCCH is equal to 12, and a quantity of symbols for sending the PSSCH is also 12. In this case, a resource for sending the PSCCH and a resource for sending the PSSCH do not overlap in frequency domain, but completely overlap in time domain. That is, FDM is performed between the resource for sending the PSCCH and the resource for sending the PSSCH.

It should be noted that, usually, a length of an SCI format (Format) carried by the PSCCH is determined. When a bit rate for sending the SCI remains unchanged, a larger quantity of time domain symbols occupied by the PSCCH indicates fewer frequency domain resources occupied by the PSCCH. Therefore, the frequency domain resources occupied by the PSCCH may be determined based on the quantity of time domain symbols occupied by the PSCCH. For example, if a total quantity of time-frequency resources that need to be occupied by the PSCCH is R, and according to FIG. 4, a time domain resource occupied by the PSCCH is configured to be 12 symbols, the frequency domain resources occupied by the PSCCH is R/12 RBs.

In the FDM resource multiplexing manner, all symbols that can be used for sending the sidelink communication in one slot are used to send the PSCCH. In this way, in a relatively long time period, the transmit end can control a power for sending the PSCCH. According to this claimed implementation, compared with the PSSCH, the transmit end uses a higher transmit power to send the PSCCH to the receive end, so that the PSCCH has higher reliability. In this way, the receive end receives correct the SCI more possibly, and further, the receive end parses the sidelink data information more possibly, thereby improving reliability of receiving the sidelink data information.

Case 2: When a quantity of symbols occupied by the sidelink control information in the one slot or mini-slot is less than a quantity of available symbols in the one slot or mini-slot, TDM is performed between a resource of the sidelink control information and a resource of the sidelink data information. This implementation has not been claimed as such.

In this implementation of this application, the time division multiplexing means that frequency division multiplexing is performed between at least a portion of the resource of the sidelink data information and all of the resource of the sidelink control information, and time division multiplexing is performed between at least the portion of the resource of the sidelink data information and all of the resource of the sidelink control information, or time division multiplexing is performed between all of the resource of the sidelink data information and all of the resource of the sidelink control information. The quantity of available symbols in the one slot or mini-slot is a quantity of symbols that are used to send the PSCCH and the PSSCH in the one slot or mini-slot.

Referring to FIG. 5, time division multiplexing is performed on all resources occupied by the PSSCH and all resources occupied by the PSCCH. That is, in one slot or mini-slot, a resource occupied by the PSCCH and a resource occupied by the PSSCH are the same in frequency domain, and do not overlap in time domain.

There are also two manners for that frequency division multiplexing is performed between at least the part of the resource of the sidelink data information and all of the resource of the sidelink control information, and time division multiplexing is performed between at least the portion of the resource of the sidelink data information and all of the resource of the sidelink control information.

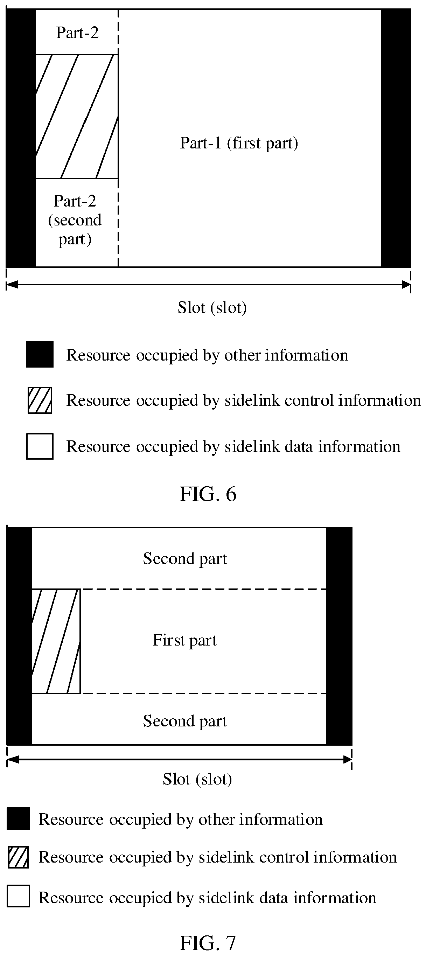

Referring to FIG. 6, in an implementation, resources occupied by sidelink data information are divided into two parts. As shown in FIG. 6, in one slot or mini-slot, a first part (part-1) of resources occupied by the PSSCH and all resources occupied by the PSCCH do not overlap in time domain, that is, time division multiplexing is performed. In the one slot or mini-slot, a second part (part-2) of resources occupied by the PSSCH and all resources occupied by the PSCCH are the same in time domain, and do not overlap in frequency domain, that is, frequency division multiplexing is performed.

Referring to FIG. 7, in another implementation, in one slot or mini-slot, a first part (part-1) of resources occupied by the PSSCH and all resources occupied by the PSCCH are the same in frequency domain, and do not overlap in time domain, that is, time division multiplexing is performed. In the one slot or mini-slot, a second part (part-2) of resources occupied by the PSSCH and all resources occupied by the PSCCH do not overlap in frequency domain, that is, frequency division multiplexing is performed.

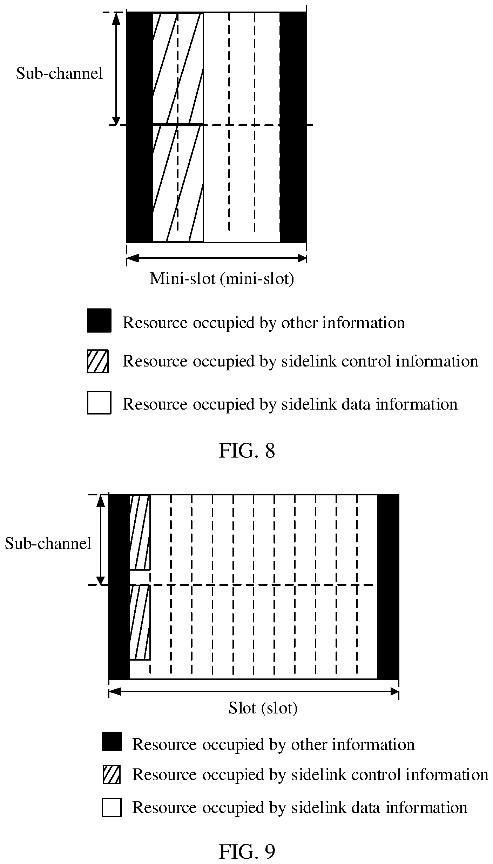

According to the foregoing resource configuration method, when the resource indication information indicates that time division multiplexing is performed between a resource of the PSSCH and a resource of the PSCCH in the one slot or mini-slot, and a relatively large quantity of frequency domain resources are occupied by the PSSCH in the one slot or mini-slot, a relatively small quantity of symbols are occupied by the PSCCH in the one slot or mini-slot. FIG. 9 is used as an example. The PSCCH occupies one symbol in one slot. After a time length of the one symbol, the receive end can parse the SCI on the one symbol, and then start to parse the sidelink data information based on the successfully parsed SCI. That is, the receive end may quickly receive and parse the sidelink data information based on the parsed SCI, thereby reducing service latency.

In FIG. 4 to FIG. 7, an example in which resources of the PSCCH and the PSSCH are configured in one slot of a normal CP is used. In addition, the quantity of symbols occupied by the PSCCH may be further configured in a mini-slot at a granularity of the mini-slot, to configure resources of the PSCCH and the sidelink data information. The resource configuration method in the mini-slot may be applied to an ultra-reliable low-latency communication (Ultra Reliable Low Latency Communications, URLLC) scenario of 5G. For example, referring to FIG. 8, one mini-slot includes seven symbols of a normal CP. The resource indication information indicates that the PSCCH occupies two symbols. That is, TDM is performed between a resource occupied by the PSCCH and a resource occupied by the PSSCH. Herein, an example in which TDM is configured between the resource of the PSCCH and the resource of the PSSCH in the one mini-slot is used. For a specific method for configuring a resource in the mini-slot, refer to the method for configuring a resource in the slot. Details are not described herein again.

Certainly, in this implementation of this application, resource configuration can be further performed at a granularity of an extended cyclic prefix (Extended Cyclic Prefix) slot or a mini-slot. For a configuration manner, refer to a manner of configuring a resource in a slot or a mini-slot of the normal CP. Details are not described herein again.

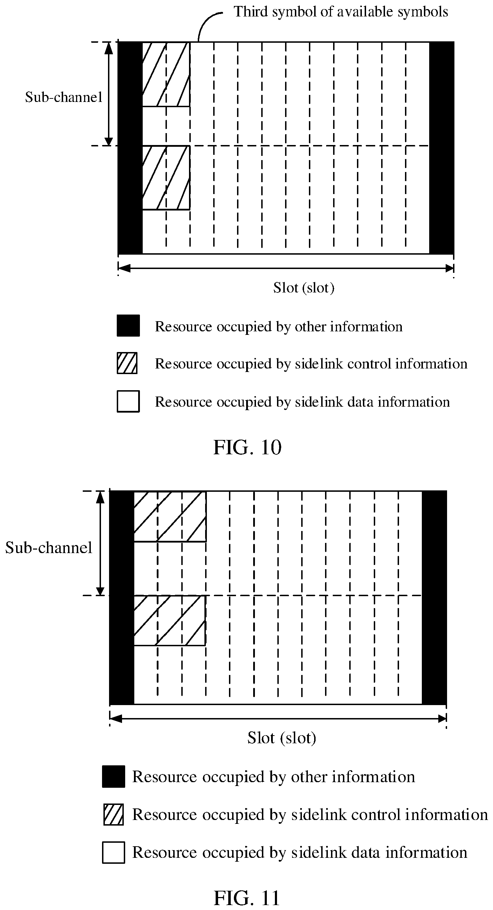

For example, the resource indication information in this implementation of this application may be 2-bit information. In a configuration manner, when the resource indication information is 00, as shown in FIG. 9, it indicates that the PSCCH occupies one symbol in one slot or mini-slot. When the resource indication information is 01, as shown in FIG. 10, it indicates that the PSCCH occupies two symbols in one slot or mini-slot. When the resource indication information is 10, as shown in FIG. 11, it indicates that the PSCCH occupies three symbols in one slot or mini-slot. When the resource indication information is 11, as shown in FIG. 4, it indicates that the PSCCH occupies all available symbols in one slot or mini-slot, that is, occupies all symbols that can be used for sidelink communication.

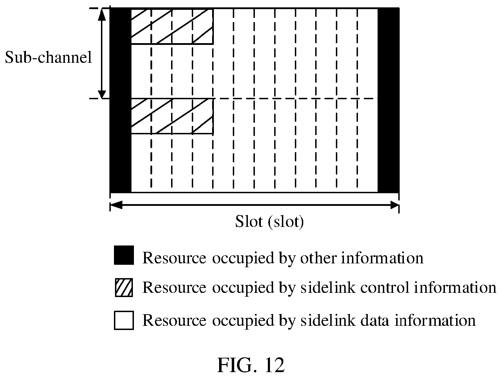

In another configuration manner, when the resource indication information is 00, as shown in FIG. 10, it indicates that the PSCCH occupies two symbols in one slot or mini-slot. When the resource indication information is 01, as shown in FIG. 11, it indicates that the PSCCH occupies three symbols in one slot or mini-slot. When the resource indication information is 10, as shown in FIG. 12, it indicates that the PSCCH occupies four symbols in one slot or mini-slot. When the resource indication information is 11, as shown in FIG. 4, it indicates that the PSCCH occupies, in one slot or mini-slot, all symbols that can be used for sending sidelink communication, that is, a quantity of symbols that are used to send the PSCCH and the PSSCH in the one slot or mini-slot.

In this case, use of 2-bit resource indication information can reduce signaling overheads and meet a requirement of the sidelink communication.

Certainly, the resource indication information may alternatively be, for example, 3-bit information. 000 indicates that the PSCCH occupies one symbol in one slot or mini-slot, 001 indicates that the PSCCH occupies two symbols in one slot or mini-slot, and so on. The resource indication information may indicate eight different resource configuration cases.

The resource indication information may alternatively be 1-bit information. For example, 0 indicates that the PSCCH occupies X symbols in one slot or mini-slot. X is a fixed value, and X is an integer greater than or equal to 1 and less than the quantity of available symbols. That is, 2 or 3 indicates a time division multiplexing manner of the PSSCH and the PSCCH, and 1 indicates a frequency division multiplexing manner of the PSSCH and the PSCCH. This implementation has not been claimed as such.

The foregoing uses an example in which the resource indication information is 1-bit information, 2-bit information, or 3-bit information for description. An information bit length of the resource indication information may alternatively be set based on an actual application. This is not limited in this implementation of this application.

In this implementation of this application, there are two resource scheduling manners of a terminal, that is, the terminal obtains the resource indication information in two manners. In one manner, an access network device configures a resource of the terminal. In the other manner, the terminal independently determines resources occupied by the PSCCH and the PSSCH. The following separately describes the two manners.

Manner 1: The terminal independently determines the resource indication information.

The terminal may independently select a required resource from a configured resource pool (Resource Pool, RP). The resource pool is a set of resources used for sidelink communication. The resource pool includes one or more consecutive or non-consecutive resource blocks (Resource block, RB) in frequency domain, or a sidelink resource pool includes one or more consecutive or non-consecutive sub-channels (sub-channel) in frequency domain. Each sub-channel includes one or more consecutive RBs. The resource pool includes one or more consecutive or non-consecutive subframes (subframe) in time domain, or the sidelink resource pool includes one or more consecutive or non-consecutive slots and/or mini-slots in time domain.

Optionally, all terminals that use a same resource pool have the same resource indication information. To be specific, when these terminals send PSCCHs and PSSCHs, the PSCCHs occupy a same quantity of symbols in one slot or mini-slot. For example, the configured resource pool includes 20 RBs in frequency domain and 20 slots in time domain. When all the terminals in the resource pool send the PSCCHs and the PSSCHs, each of the PSCCHs occupies two symbols in one slot or mini-slot.

Manner 2: The terminal obtains the resource indication information from the access network device. Specifically, the access network device configures a resource pool used for sidelink communication, or configures a bandwidth part (Bandwidth Part, BWP) resource used for sidelink communication. The BWP resource includes one or more consecutive or non-consecutive RBs in frequency domain.

Optionally, all terminals that use a same resource pool or BWP resource have the same resource indication information. To be specific, when these terminals send PSCCHs and PSSCHs, the PSCCHs occupy a same quantity of symbols in one slot or mini-slot. The access network device may configure a resource pool or a BWP resource 1 used for sidelink communication for some terminals in a managed geographical area, and configure a resource pool or a BWP resource 2 for some terminals in another geographical area. Alternatively, the access network device configures, based on service requirements of different terminals, a BWP resource or a resource pool used for sidelink communication for some terminals having a same or similar service requirement. For example, the access network device configures, for some terminals that perform a low-latency communication service, a BWP resource 1 used for sidelink communication, and configures, for some other terminals that perform a high-reliability service, a BWP resource 2 used for sidelink communication.

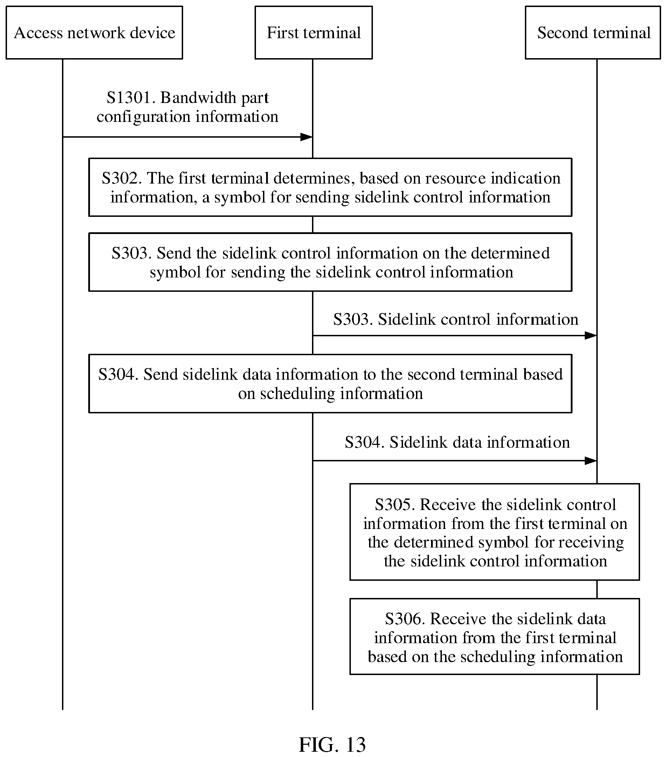

Specifically, referring to FIG. 13, an example in which the first terminal and the second terminal use at least some same BWP resources, and the access network device configures the BWP resources is used. A specific implementation is S1301. That is, S301 in FIG. 3 may be specifically the following step S1301.

S1301. The access network device sends bandwidth part (BWP) configuration information to the first terminal.

Correspondingly, the first terminal receives the BWP configuration information from the access network device.

The BWP configuration information includes the resource indication information.

Certainly, the second terminal may alternatively receive the BWP configuration information from the access network device. The BWP configuration information includes the resource indication information. The resource indication information of the first terminal is the same as resource indication information of the second terminal. In other words, when the first terminal and the second terminal perform sidelink communication on a BWP resource, a quantity of symbols occupied by the PSCCH of the first terminal in the one slot or mini-slot is the same as a quantity of symbols occupied by the PSCCH of the second terminal in the one slot or mini-slot.

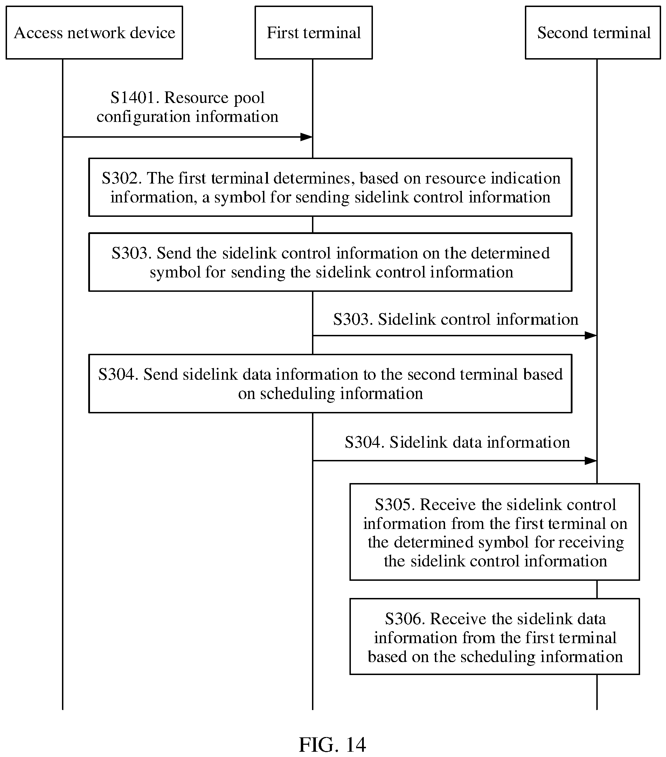

Specifically, referring to FIG. 14, an example in which the first terminal and the second terminal use a same resource pool (RP), and the access network device configures the resource pool is used. A specific implementation is S1401. That is, S301 in FIG. 3 may be specifically the following step S1401.

S1401. The access network device sends resource pool (RP) configuration information to the first terminal.

Correspondingly, the first terminal receives the RP configuration information from the access network device. The RP configuration information includes the resource indication information.

Certainly, the second terminal may alternatively receive the RP configuration information from the access network device. The RP configuration information includes the resource indication information. The resource indication information of the first terminal is the same as resource indication information of the second terminal. In other words, when the first terminal and the second terminal that use a same resource pool perform sidelink communication, a quantity of symbols occupied by the PSCCH of the first terminal in the one slot or mini-slot is the same as a quantity of symbols occupied by the PSCCH of the second terminal in the one slot or mini-slot.

S302. The first terminal determines, based on the resource indication information, a symbol for sending the sidelink control information, where the sidelink control information is used to indicate to send scheduling information of the sidelink data information.

The scheduling information of the sidelink data information includes but is not limited to an encoding format of the sidelink data information. The encoding format is used to indicate a demodulation/decoding format of the sidelink data information, for example, indicate a modulation mode (for example, quadrature phase shift keying (Quadrature Phase Shift Keying, QPSK), 16 quadrature amplitude modulation (16 Quadrature Amplitude Modulation, 16 QAM), or 64 quadrature amplitude modulation (64 Quadrature Amplitude Modulation, 64 QAM)) of the sidelink data information, or indicate at least one of a bit rate of channel coding (for example, a 1/3 bit rate or a 3/4 bit rate), a time-frequency resource used by the PSCCH, reservation information of a PSCCH resource, an indication indicating whether retransmission is performed, a source address of the terminal, a destination address (including a group address) of the terminal, hybrid automatic repeat request (Hybrid Automatic Repeat reQuest, HARQ) information, and the like.

In an example, referring to FIG. 10, the first terminal determines, based on the resource indication information, to send the sidelink control information on the first symbol and the second symbol in one slot. For example, the sidelink control information may indicate that the modulation mode of the sidelink data information sent by the first terminal is QPSK, and a bit rate of the sidelink data information is the 1/3 bit rate.

S303. The first terminal sends the sidelink control information on the determined symbol for sending the sidelink control information.

Still referring to FIG. 10, the first terminal sends the sidelink control information on the first symbol and the second symbol in the one slot.

An example in which the first terminal and the second terminal use a same resource pool is used. Because the first terminal and the second terminal have the same resource indication information, when the first terminal is used as the transmit end of the sidelink communication and the second terminal is used as the receive end of the sidelink communication, the first terminal does not need to notify, by using the PSCCH, the second terminal of the resource indication information used by the first terminal. That is, the SCI in S303 does not include the resource indication information.

S304. The first terminal sends the sidelink data information to the second terminal based on the scheduling information.

With reference to S303 and FIG. 10, the first terminal sends the sidelink data information to the second terminal on 10 symbols in one slot. The modulation mode of the sidelink data information is, for example, QPSK, and the bit rate of the sidelink data information is, for example, the 1/3 bit rate.

S305. The second terminal receives the sidelink control information from the first terminal on the determined symbol for receiving the sidelink control information, where the sidelink control information is used to indicate the first terminal to send the scheduling information of the sidelink data information.

As described in S303, the SCI received by the second terminal from the first terminal does not include the resource indication information.

For a manner in which the second terminal determines the symbol for receiving the sidelink control information, refer to the foregoing manner in which the first terminal obtains the resource indication information. That is, the access network device configures the resource indication information of the second terminal, and then the second terminal determines the symbol for receiving the sidelink control information. For example, the sidelink control information occupies two symbols in one slot. Alternatively, the second terminal independently determines the resource indication information.

In an example, the first terminal and the second terminal use a same resource pool. In other words, the resource indication information of the first terminal is the same as the resource indication information of the second terminal. For example, in S303, the first terminal sends the sidelink data information on the first symbol and the second symbol in the one slot, and correspondingly, the second terminal receives the sidelink data information from the first terminal on the first symbol and the second symbol in the one slot.

S306. The second terminal receives the sidelink data information from the first terminal based on the scheduling information.

For example, in S304, the first terminal sends the sidelink data information on the 10 symbols in the one slot, and correspondingly, the second terminal receives the sidelink data information from the first terminal on the 10 symbols in the one slot, and receives the sidelink data information by using the 1/3 bit rate.

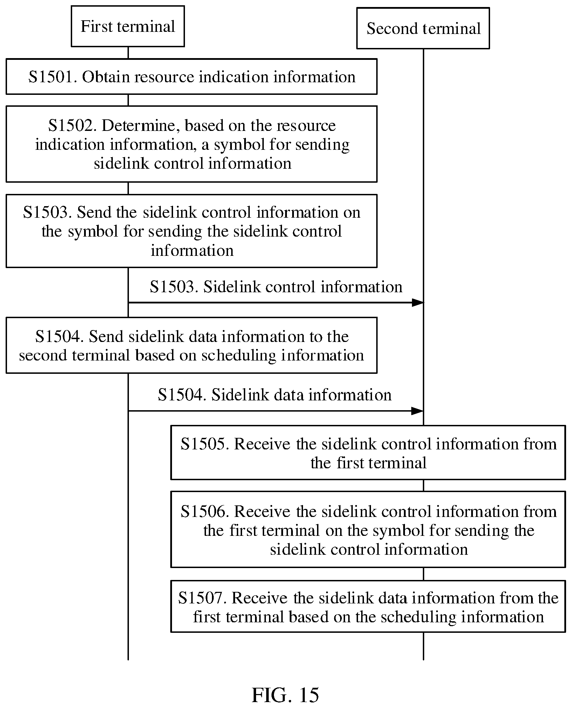

An implementation of this application further provides a resource configuration method. Referring to FIG. 15, the method includes the following steps.

S1501. A first terminal obtains resource indication information.

The resource indication information is used to indicate a quantity of symbols occupied by a PSCCH in one slot (slot) or mini-slot (mini-slot).

In this implementation of this application, there are two resource scheduling manners of a terminal, that is, the terminal obtains the resource indication information in two manners. In one manner, an access network device configures a resource of the terminal. In the other manner, the terminal independently determines resources occupied by the PSCCH and a PSSCH. The following separately describes the two manners.

Manner 1: The terminal independently determines the resource indication information. To be specific, the terminal independently determines the quantity of symbols occupied by the PSCCH in one slot or mini-slot. In other words, the terminal obtains the resource indication information based on a higher-layer configuration.

The terminal may independently select a required resource from a configured resource pool (RP) based on a service requirement. For specific descriptions of the resource pool, refer to the foregoing descriptions. Details are not described herein again.

For example, the configured resource pool includes 20 RBs in frequency domain and 20 slots in time domain. When the terminal currently performs a low-latency service, the terminal independently determines that the PSCCH occupies a relatively small quantity of symbols in the one slot, to meet a requirement of the low-latency service. For another example, if the terminal currently performs a service that requires high reliability, the terminal independently determines that the PSSCH occupies all available symbols in the one slot. That is, FDM is performed between the PSCCH and the PSSCH.

Manner 2: The access network device configures a resource for a single terminal or a terminal group. In a possible implementation, the access network device configures different resources for different terminals based on service requirements of the different terminals.

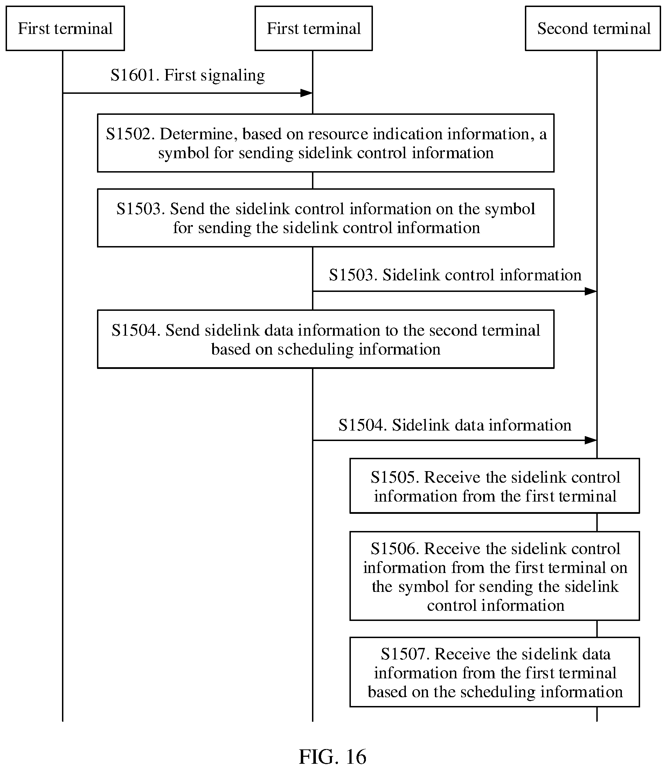

Specifically, referring to FIG. 16, an example in which the access network device configures resources for the first terminal and a second terminal is used. That the access network device configures the different resources for the different terminals may be specifically implemented by S1601, that is, S1501 in FIG. 15 may be specifically S1601.

S1601. The access network device sends first signaling to the first terminal.

Correspondingly, the first terminal receives the first signaling from the access network device.

The first signaling includes the resource indication information, and the first signaling includes at least one of a system information block (System Information Block, SIB), cell-specific (cell-specific) radio resource control (radio resource control, RRC) signaling, terminal-specific (UE-specific) RRC signaling, terminal-group common signaling (UE-group common signaling), and downlink control information (Downlink Control Information, DCI).

Certainly, the access network device may alternatively send the first signaling to the second terminal. Correspondingly, the second terminal receives the first signaling from the access network device. Therefore, the resource indication information is notified to the second terminal by using the first signaling.

S1502. The first terminal determines, based on the resource indication information, a symbol for sending sidelink control information, where the sidelink control information is used to indicate to send scheduling information of sidelink data information.

A process of S1502 is the same as that of S302. For details, refer to related descriptions of S302.

S1503. The first terminal sends the sidelink control information on the determined symbol for sending the sidelink control information.

The sidelink control information includes the scheduling information of the sidelink data information and the resource indication information. For specific descriptions of the scheduling information of the sidelink data information, refer to the foregoing descriptions. Details are not described herein again.

S1504. The first terminal sends the sidelink data information to the second terminal based on the scheduling information.

A process of S1504 is similar to that of S304. For details, refer to related descriptions of S304. Details are not described herein again.

S1505. The second terminal receives the sidelink control information from the first terminal.

The sidelink control information is used to indicate the first terminal to send the scheduling information of the sidelink data information and the symbol for sending the sidelink control information.

For example, referring to FIG. 10, the sidelink control information indicates that the symbol for sending the sidelink control information in the one slot is the first symbol and the second symbol in the available symbols, a modulation mode of the sidelink data information is QPSK, and a bit rate of the sidelink data information is a 1/3 bit rate.

S1506. The second terminal receives the sidelink control information from the first terminal on the symbol for sending the sidelink control information.

Still referring to FIG. 10, after receiving the sidelink control information, the second terminal receives, based on the symbol that is for sending the sidelink control information and that is indicated by the sidelink control information (that is, the sidelink control information sent in the one slot occupies the first and the second available symbols), the sidelink control information from the first terminal on the first and the second available symbols.

S1507. The second terminal receives the sidelink data information from the first terminal based on the scheduling information.

S1507 is similar to S306. For details, refer to related descriptions of S306. Details are not described herein again.

Based on the resource configuration method provided in this implementation of this application, the first terminal obtains the resource indication information, and sends the sidelink control information and the sidelink data information to the second terminal based on the resource indication information. The resource indication information is used to indicate a quantity of symbols occupied by the sidelink control information in the one slot or mini-slot. To be specific, quantities of symbols occupied by the sidelink control information and the sidelink data information in the one slot or mini-slot may be flexibly configured for different terminals, thereby meeting service requirements of the different terminals.

It can be understood that, to implement the foregoing functions, a network element in the implementations of this application includes a corresponding hardware structure and/or software module for performing each function. With reference to the units and algorithm steps described in the implementations disclosed in this application, the implementations of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the technical solutions in the implementations of this application.

In the implementations of this application, functional unit division may be performed on the network element based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that in the implementations of this application, division into the units is an example and is merely logical function division, and may be other division during actual implementation.

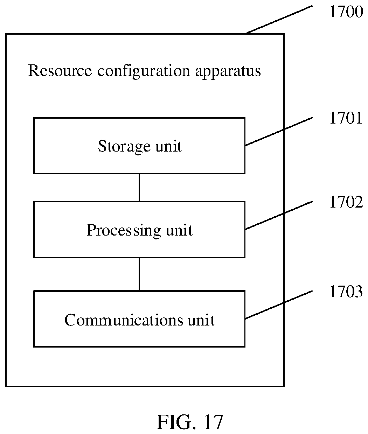

FIG. 17 is a schematic block diagram of a resource configuration apparatus according to an implementation of this application. The resource configuration apparatus may be the foregoing first terminal, the foregoing second terminal, or the foregoing access network device. The resource configuration apparatus 1700 may exist in a form of software, or may be a chip that can be used in a device. The resource configuration apparatus 1700 includes a processing unit 1702 and a communications unit 1703. Optionally, the communications unit 1703 may be further divided into a sending unit (not shown in FIG. 17) and a receiving unit (not shown in FIG. 17). The sending unit is configured to support the resource configuration apparatus 1700 in sending information to another network element. The receiving unit is configured to support the resource configuration apparatus 1700 in receiving information from the another network element.

Optionally, the resource apparatus 1700 may further include a storage unit 1701, configured to store program code and data of the resource apparatus 1700. The data may include but is not limited to original data, intermediate data, or the like.

If the resource configuration apparatus 1700 is the first terminal, the processing unit 1702 may be configured to support the first terminal in performing S301 and S302 in FIG. 3, and S1502 in FIG. 15, and/or another process used for the solutions described in this specification. The communications unit 1703 is configured to support communication between the first terminal and the another network element (for example, the foregoing first terminal), for example, support the first terminal in performing S302 in FIG. 3 and S1401 in FIG. 14. Optionally, when the communications unit is divided into the sending unit and the receiving unit, the sending unit is configured to support the first terminal in sending information to the another network element. For example, the sending unit is configured to support the first terminal in performing S302 in FIG. 3, and/or another process used for the solutions described in this specification. The receiving unit is configured to support the first terminal in receiving information from the another network element. For example, the receiving unit is configured to support the first terminal in performing S1401 in FIG. 14, and/or another process used for the solutions described in this specification.

If the resource configuration apparatus 1700 is the second terminal, the processing unit 1702 may be configured to support the second terminal in performing S303 in FIG. 3, and/or another process used for the solutions described in this specification. The communications unit 1703 is configured to support communication between the second terminal and the another network element (for example, the first terminal), for example, support the second terminal in performing S1502 in FIG. 15. Optionally, when the communications unit is divided into the sending unit and the receiving unit, for example, the sending unit may be configured to support the second terminal in sending information to the first terminal, or support the second terminal in sending information to the access network device. For example, the receiving unit may be configured to support the second terminal in performing S1502 in FIG. 15, and/or another process used for the solutions described in this specification.

If the resource configuration apparatus 1700 is the access network device, the processing unit 1702 may be configured to support the access network device in determining a configuration resource to be allocated to the first terminal or the second terminal, and/or another process used for the solutions described in this specification. The communications unit 1703 is configured to support communication between the access network device and the another network element (for example, the foregoing first terminal), for example, support the access network device in performing S1401 in FIG. 14. Optionally, when the communications unit is divided into the sending unit and the receiving unit, for example, the sending unit may be configured to support the access network device in performing S1601 in FIG. 16, and/or another process used for the solutions described in this specification. The receiving unit may be configured to support the access network device in receiving information from the first terminal or the second terminal.

In a possible manner, the processing unit 1702 may be a controller, or the processor 201 or the processor 207 shown in FIG. 2, for example, a central processing unit (Central Processing Unit, CPU), a general-purpose processor, a digital signal processing (Digital Signal Processing, DSP), an application-specific integrated circuit (Application Specific Integrated Circuit, ASIC), a field programmable gate array (Field-Programmable Gate Array, FPGA) or another programmable logic device, a transistor logic device, a hardware component, or any combination thereof. The processing unit 1702 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The communications unit 1703 may be the transceiver 204 shown in FIG. 2, or may be a transceiver circuit or the like. The storage unit 1701 may be the memory 203 shown in FIG. 2.

A person of ordinary skill in the art may understand that all or some of the foregoing implementations may be implemented by using software, hardware, firmware, or any combination thereof. When software is used for implementation, all or some of the implementations may be implemented in a form of computer program product. The computer program product includes one or more computer instructions. When the computer program instructions are loaded and executed on a computer, all or some of the procedures or the functions according to the implementations of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another web site, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid-state drive (Solid State Disk, SSD)), or the like.

In the several implementations provided in this application, it should be understood that the disclosed system, apparatus, and method may be implemented in other manners. For example, the described apparatus implementation is merely an example. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical or other forms.

The units described as separate parts may or may not be physically separate, and parts displayed as units may or may not be physical units, may be located in one position, or may be distributed on a plurality of network devices (for example, a terminal device). Some or all of the units may be selected based on actual requirements to achieve the objectives of the solutions of the implementations.

In addition, functional units in the implementations of this application may be integrated into one processing unit, or each of the functional units may exist alone, or two or more units are integrated into one unit. The integrated unit may be implemented in a form of hardware, or may be implemented in a form of hardware combined with a software functional unit.

Based on the foregoing descriptions of the implementation, a person skilled in the art may clearly understand that this application may be implemented by software in addition to necessary universal hardware or certainly, by hardware only. In most cases, the former is a preferred implementation. Based on such an understanding, the technical solutions of this application essentially or the part contributing to the conventional technology may be implemented in a form of a software product. The computer software product is stored in a readable storage medium, such as a floppy disk, a hard disk, or an optical disc of the computer, and includes several instructions for instructing a computer device (which may be a personal computer, a server, a network device, or the like) to perform the methods described in the implementations of this application.

The scope of protection shall be defined by the appended claims.

## Claims

1. A resource configuration method, comprising:
obtaining (S301), by a first terminal, resource indication information, wherein the resource indication information is used to indicate a symbol or a quantity of symbols occupied by sidelink control information in one slot or mini-slot;
determining (S302), by the first terminal based on the resource indication information, the symbol for sending the sidelink control information, wherein the sidelink control information is used to indicate to send scheduling information of sidelink data information;
sending (S303), by the first terminal, the sidelink control information on the determined symbol for sending the sidelink control information; and
sending (S304), by the first terminal, the sidelink data information to a second terminal based on the scheduling information;
wherein when the quantity of symbols occupied by the sidelink control information in the one slot or mini-slot is equal to a quantity of available symbols in the one slot or mini-slot, frequency division multiplexing is performed between a resource of the sidelink control information and a resource of the sidelink data information; and
the quantity of available symbols in the one slot or mini-slot is a quantity of symbols used to send the sidelink control information and the sidelink data information in the one slot or mini-slot;
**characterized by** the sidelink control information being transmitted at a higher power relative to the sidelink data information.

2. The resource configuration method according to claim 1, wherein the obtaining, by a first terminal, resource indication information comprises:
receiving, by the first terminal, bandwidth part BWP configuration information from an access network device, wherein the BWP configuration information comprises the resource indication information, and the resource indication information of the first terminal is the same as resource indication information of the second terminal; or
the obtaining, by a first terminal, resource indication information comprises: receiving, by the first terminal, resource pool RP configuration information from an access network device, wherein the RP configuration information comprises the resource indication information, and the resource indication information of the first terminal is the same as resource indication information of the second terminal.

3. The resource configuration method according to claim 1, wherein the obtaining, by a first terminal, resource indication information comprises: independently determining, by the first terminal, the resource indication information.

4. The resource configuration method according to claim 1, wherein the obtaining, by a first terminal, resource indication information comprises:
receiving, by the first terminal, first signaling from an access network device, wherein the first signaling comprises the resource indication information, and the first signaling comprises at least one of a system information block SIB, cell-specific radio resource control RRC signaling, terminal-specific RRC signaling, terminal-group common UE-Group common signaling, and downlink control signaling DCI.

5. The resource configuration method according to claim 1, wherein
the sidelink control information is further used to indicate the symbol for sending the sidelink control information.

6. A resource configuration method, comprising:
obtaining, by a second terminal, resource indication information, wherein the resource indication information is used to indicate a symbol or a quantity of symbols occupied by sidelink control information in one slot or mini-slot;
determining, by the second terminal based on the resource indication information, the symbol for receiving the sidelink control information, wherein the sidelink control information is used to indicate to receive scheduling information of sidelink data information;
receiving (S305), by the second terminal, the sidelink control information from a first terminal on the determined symbol for receiving the sidelink control information, wherein the sidelink control information is used to indicate the first terminal to send the scheduling information of the sidelink data information; and
receiving (S306), by the second terminal, the sidelink data information from the first terminal based on the scheduling information;
wherein when the quantity of symbols occupied by the sidelink control information in the one slot or mini-slot is equal to a quantity of available symbols in the one slot or mini-slot, frequency division multiplexing is performed between a resource of the sidelink control information and a resource of the sidelink data information; and
the quantity of available symbols in the one slot or mini-slot is a quantity of symbols used to send the sidelink control information and the sidelink data information in the one slot or mini-slot;
**characterized by** the sidelink control information being received at a higher power relative to the sidelink data information.

7. The resource configuration method according to claim 6, wherein:
the obtaining, by a second terminal, resource indication information comprises: receiving, by the second terminal, bandwidth part BWP configuration information from an access network device, wherein the BWP configuration information comprises the resource indication information, and resource indication information of the first terminal is the same as the resource indication information of the second terminal; or
the obtaining, by a second terminal, resource indication information comprises: receiving, by the second terminal, resource pool RP configuration information from an access network device, wherein resource indication information of the first terminal is the same as the resource indication information of the second terminal.

8. The resource configuration method according to claim 6, wherein:
the obtaining, by a second terminal, resource indication information comprises: receiving, by the second terminal, the sidelink control information from the first terminal.

9. A resource configuration apparatus configured to perform the method of any one of claims 1 to 8.

## Patentansprüche

1. Ressourcenkonfigurationsverfahren, umfassend:
Erlangen (S301) von Ressourcenanzeigeinformationen durch ein erstes Endgerät, wobei die Ressourcenanzeigeinformationen verwendet werden, um ein Symbol oder eine Anzahl von Symbolen anzuzeigen, die durch Sidelink-Steuerinformationen in einem Slot oder Minislot belegt sind;
Bestimmen (S302) des Symbols zum Senden der Sidelink-Steuerinformationen durch das erste Endgerät auf Grundlage der Ressourcenanzeigeinformationen, wobei die Sidelink-Steuerinformationen verwendet werden, um anzuzeigen, dass Planungsinformationen von Sidelink-Dateninformationen gesendet werden sollen;
Senden (S303) der Sidelink-Steuerinformationen durch das erste Endgerät auf dem bestimmten Symbol zum Senden der Sidelink-Steuerinformationen; und
Senden (S304) der Sidelink-Dateninformationen durch das erste Endgerät an ein zweites Endgerät auf der Grundlage der Planungsinformationen;
wobei, wenn die Menge der von den Sidelink-Steuerinformationen in dem einen Slot oder Minislot belegten Symbole gleich einer Menge der verfügbaren Symbole in dem einen Slot oder Minislot ist, Frequenzmultiplexen zwischen einer Ressource der Sidelink-Steuerinformationen und einer Ressource der Sidelink-Dateninformationen durchgeführt wird; und
die Menge der verfügbaren Symbole in dem einen Slot oder Minislot eine Menge von Symbolen ist, die zum Senden der Sidelink-Steuerinformationen und der Sidelink-Dateninformationen in dem einen Slot oder Minislot verwendet wird; **dadurch gekennzeichnet, dass** die Sidelink-Steuerinformationen im Verhältnis zu den Sidelink-Dateninformationen mit einer höheren Leistung übertragen werden.

2. Ressourcenkonfigurationsverfahren nach Anspruch 1, wobei das Erlangen von Ressourcenanzeigeinformationen durch ein erstes Endgerät Folgendes umfasst:
Empfangen von Bandbreitenteil-BWP-Konfigurationsinformationen von einer Zugangsnetzwerkvorrichtung durch das erste Endgerät, wobei die BWP-Konfigurationsinformationen die Ressourcenanzeigeinformationen umfassen und die Ressourcenanzeigeinformationen des ersten Endgeräts dieselben wie die Ressourcenanzeigeinformationen des zweiten Endgeräts sind; oder
das Erlangen von Ressourcenanzeigeinformationen durch ein erstes Endgerät Folgendes umfasst: Empfangen von Ressourcenpool-RP-Konfigurationsinformationen durch das erste Endgerät von einer Zugangsnetzwerkvorrichtung, wobei die RP-Konfigurationsinformationen die Ressourcenanzeigeinformationen umfassen und die Ressourcenanzeigeinformationen des ersten Endgeräts dieselben wie die Ressourcenanzeigeinformationen des zweiten Endgeräts sind.

3. Ressourcenkonfigurationsverfahren nach Anspruch 1, wobei das Erlangen von Ressourcenanzeigeinformationen durch ein erstes Endgerät Folgendes umfasst: unabhängiges Bestimmen der Ressourcenanzeigeinformationen durch das erste Endgerät.

4. Ressourcenkonfigurationsverfahren nach Anspruch 1, wobei das erlangen von Ressourcenanzeigeinformationen durch ein erstes Endgerät Folgendes umfasst:
Empfangen einer ersten Signalisierung von einer Zugangsnetzwerkvorrichtung durch das erste Endgerät, wobei die erste Signalisierung die Ressourcenanzeigeinformationen umfasst und die erste Signalisierung mindestens eines der folgenden Elemente umfasst: einen Systeminformationsblock SIB, eine zellenspezifische Funkressourcensteuerungs-RRC-Signalisierung, eine Endgeräte-spezifische RRC-Signalisierung, eine Endgerätegruppenübergreifende UE-Gruppen-Signalisierung und eine Downlink-Steuerungssignalisierung DCI.

5. Ressourcenkonfigurationsverfahren nach Anspruch 1, wobei die Sidelink-Steuerinformationen außerdem verwendet werden, um das Symbol zum Senden der Sidelink-Steuerinformationen anzugeben.

6. Ressourcenkonfigurationsverfahren, umfassend:
Erlangen von Ressourcenanzeigeinformationen durch ein zweites Endgerät, wobei die Ressourcenanzeigeinformationen verwendet werden, um ein Symbol oder eine Anzahl von Symbolen anzuzeigen, die durch Sidelink-Steuerinformationen in einem Slot oder Minislot belegt sind;
Bestimmen des Symbols zum Enpfangen der Sidelink-Steuerinformationen durch das zweite Endgerät auf Grundlage der Ressourcenanzeigeinformationen, wobei die Sidelink-Steuerinformationen verwendet werden, um anzuzeigen, dass Planungsinformationen von Sidelink-Dateninformationen empfangen werden sollen;
Empfangen (S305) der Sidelink-Steuerinformationen von einem ersten Endgerät durch das zweite Endgerät auf dem bestimmten Symbol zum Empfangen der Sidelink-Steuerinformationen, wobei die Sidelink-Steuerinformationen verwendet werden, um dem ersten Endgerät anzugeben, dass die Planungsinformationen der Sidelink-Dateninformationen gesendet werden sollen; und
Empfangen (S306) der Sidelink-Dateninformationen durch das zweite Endgerät von dem ersten Endgerät auf der Grundlage der Planungsinformationen;
wobei, wenn die Menge der von den Sidelink-Steuerinformationen in dem einen Slot oder Minislot belegten Symbole gleich einer Menge der verfügbaren Symbole in dem einen Slot oder Minislot ist, Frequenzmultiplexen zwischen einer Ressource der Sidelink-Steuerinformationen und einer Ressource der Sidelink-Dateninformationen durchgeführt wird; und
die Menge der verfügbaren Symbole in dem einen Slot oder Minislot eine Menge von Symbolen ist, die zum Senden der Sidelink-Steuerinformationen und der Sidelink-Dateninformationen in dem einen Slot oder Minislot verwendet wird; **dadurch gekennzeichnet, dass** die Sidelink-Steuerinformationen im Verhältnis zu den Sidelink-Dateninformationen mit einer höheren Leistung empfangen werden.

7. Ressourcenkonfigurationsverfahren nach Anspruch 6, wobei:
das Erlangen von Ressourcenanzeigeinformationen durch ein zweites Endgerät Folgendes umfasst: Empfangen von Bandbreitenteil-BWP-Konfigurationsinformationen durch das zweites Endgerät von einer Zugangsnetzwerkvorrichtung, wobei die BWP-Konfigurationsinformationen die Ressourcenanzeigeinformationen umfassen und Ressourcenanzeigeinformationen des ersten Endgeräts dieselben wie die Ressourcenanzeigeinformationen des zweiten Endgeräts sind; oder
das Erlangen von Ressourcenanzeigeinformationen durch ein zweites Endgerät Folgendes umfasst: Empfangen von Ressourcenpool-RP-Konfigurationsinformationen durch das zweite Endgerät von einer Zugangsnetzwerkvorrichtung, wobei die Ressourcenanzeigeinformationen des ersten Endgeräts dieselben wie die Ressourcenanzeigeinformationen des zweiten Endgeräts sind.

8. Ressourcenkonfigurationsverfahren nach Anspruch 6, wobei:
das Erlangen von Ressourcenanzeigeinformationen durch ein zweites Endgerät Folgendes umfasst: Empfangen der Sidelink-Steuerinformationen vom ersten Endgerät durch das zweite Endgerät.

9. Ressourcenkonfigurationsvorrichtung, die zum Ausführen des Verfahrens nach einem der Ansprüche 1 bis 8 konfiguriert ist.

## Revendications

1. Procédé de configuration de ressources, comprenant :
l'obtention (S301), par un premier terminal, d'informations d'indication de ressource, dans lequel les informations d'indication de ressource sont utilisées pour indiquer un symbole ou une quantité de symboles occupés par des informations de contrôle de liaison latérale dans un intervalle ou un mini-intervalle ;
la détermination (S302), par le premier terminal sur la base des informations d'indication de ressource, du symbole pour envoyer les informations de contrôle de liaison latérale, dans lequel les informations de contrôle de liaison latérale sont utilisées pour indiquer d'envoyer des informations de planification d'informations de données de liaison latérale ;
l'envoi (S303), par le premier terminal, des informations de contrôle de liaison latérale sur le symbole déterminé pour envoyer les informations de contrôle de liaison latérale ; et
l'envoi (S304), par le premier terminal, des informations de données de liaison latérale à un second terminal sur la base des informations de planification ;
dans lequel, lorsque la quantité de symboles occupés par les informations de contrôle de liaison latérale dans un intervalle ou un mini-intervalle est égale à une quantité de symboles disponibles dans un intervalle ou un mini-intervalle, un multiplexage par répartition en fréquence est effectué entre une ressource des informations de contrôle de liaison latérale et une ressource des informations de données de liaison latérale ; et
la quantité de symboles disponibles dans un intervalle ou un mini-intervalle est une quantité de symboles utilisés pour envoyer les informations de contrôle de liaison latérale et les informations de données de liaison latérale dans un intervalle ou un mini-intervalle ; **caractérisé par le fait que** les informations de contrôle de liaison latérale sont transmises à une puissance supérieure par rapport aux informations de données de liaison latérale.

2. Procédé de configuration de ressources selon la revendication 1, dans lequel l'obtention, par un premier terminal, d'informations d'indication de ressources comprend :
la réception, par le premier terminal, d'informations de configuration BWP de partie de bande passante provenant d'un dispositif de réseau d'accès, dans lequel les informations de configuration BWP comprennent les informations d'indication de ressource, et les informations d'indication de ressource du premier terminal sont les mêmes que les informations d'indication de ressource du second terminal ; ou
l'obtention, par un premier terminal, d'informations d'indication de ressources comprend : la réception, par le premier terminal, d'informations de configuration RP d'ensemble de ressources provenant d'un dispositif de réseau d'accès, dans lequel les informations de configuration RP comprennent les informations d'indication de ressources, et les informations d'indication de ressources du premier terminal sont les mêmes que les informations d'indication de ressources du second terminal.

3. Procédé de configuration de ressources selon la revendication 1, dans lequel l'obtention, par un premier terminal, d'informations d'indication de ressources comprend : la détermination indépendante, par le premier terminal, des informations d'indication de ressources.

4. Procédé de configuration de ressources selon la revendication 1, dans lequel l'obtention, par un premier terminal, d'informations d'indication de ressources comprend :
la réception, par le premier terminal, d'une première signalisation provenant d'un dispositif de réseau d'accès, dans lequel la première signalisation comprend les informations d'indication de ressource, et la première signalisation comprend au moins l'un d'un bloc d'informations système, SIB, d'une signalisation RRC de contrôle de ressource radio spécifique à la cellule, d'une signalisation RRC spécifique au terminal, d'une signalisation commune UE-Group commune au groupe de terminaux et des DCI de signalisation de contrôle de liaison descendante.

5. Procédé de configuration de ressources selon la revendication 1, dans lequel
les informations de contrôle de liaison latérale sont également utilisées pour indiquer le symbole permettant d'envoyer les informations de contrôle de liaison latérale.

6. Procédé de configuration de ressources, comprenant :
l'obtention, par un second terminal, d'informations d'indication de ressource, dans lequel les informations d'indication de ressource sont utilisées pour indiquer un symbole ou une quantité de symboles occupés par des informations de contrôle de liaison latérale dans un intervalle ou un mini-intervalle ;
la détermination, par le second terminal sur la base des informations d'indication de ressource, du symbole pour recevoir les informations de contrôle de liaison latérale, dans lequel les informations de contrôle de liaison latérale sont utilisées pour indiquer de recevoir des informations de planification d'informations de données de liaison latérale ;
la réception (S305), par le second terminal, des informations de contrôle de liaison latérale provenant d'un premier terminal sur le symbole déterminé pour recevoir les informations de contrôle de liaison latérale, dans lequel les informations de contrôle de liaison latérale sont utilisées pour indiquer au premier terminal d'envoyer les informations de planification des informations de données de liaison latérale ; et
la réception (S306), par le second terminal, des informations de données de liaison latérale en provenance du premier terminal sur la base des informations de planification ;
dans lequel, lorsque la quantité de symboles occupés par les informations de contrôle de liaison latérale dans un intervalle ou un mini-intervalle est égale à une quantité de symboles disponibles dans un intervalle ou un mini-intervalle, un multiplexage par répartition en fréquence est effectué entre une ressource des informations de contrôle de liaison latérale et une ressource des informations de données de liaison latérale ; et
la quantité de symboles disponibles dans un intervalle ou un mini-intervalle est une quantité de symboles utilisés pour envoyer les informations de contrôle de liaison latérale et les informations de données de liaison latérale dans un intervalle ou un mini-intervalle ; **caractérisé par le fait que** les informations de contrôle de liaison latérale sont reçues à une puissance supérieure par rapport aux informations de données de liaison latérale.

7. Procédé de configuration de ressources selon la revendication 6, dans lequel :
l'obtention, par un second terminal, d'informations d'indication de ressources comprend : la réception, par le second terminal, d'informations de configuration BWP de partie de bande passante provenant d'un dispositif de réseau d'accès, dans lequel les informations de configuration BWP comprennent les informations d'indication de ressources, et les informations d'indication de ressources du premier terminal sont les mêmes que les informations d'indication de ressources du second terminal ; ou
l'obtention, par un second terminal, d'informations d'indication de ressources comprend : la réception, par le second terminal, d'informations de configuration RP d'ensemble de ressources provenant d'un dispositif de réseau d'accès, dans lequel les informations d'indication de ressources du premier terminal sont les mêmes que les informations d'indication de ressources du second terminal.

8. Procédé de configuration de ressources selon la revendication **6,** dans lequel :
l'obtention, par un second terminal, d'informations d'indication de ressources comprend : la réception, par le second terminal, des informations de contrôle de liaison latérale en provenance du premier terminal.

9. Appareil de configuration de ressources configuré pour exécuter le procédé selon l'une quelconque des revendications 1 à 8.
